Europäisches Patentamt

European Patent Office

Office européen des brevets

(19)

(11) Veröffentlichungsnummer: **0 071 561**

**A2**

(12) **EUROPÄISCHE PATENTANMELDUNG**

(21) Anmeldenummer: 82730090.6

(22) Anmeldetag: 30.06.82

(51) Int. Cl.³: **G 01 D 5/26**

(30) Priorität: 30.06.81 DE 3126311

(43) Veröffentlichungstag der Anmeldung:
09.02.83 Patentblatt 83/6

(84) Benannte Vertragsstaaten:
AT BE CH DE FR GB IT LI LU NL SE

(71) Anmelder: Hahn-Meitner-Institut für Kernforschung
Berlin GmbH
Glienicker Strasse 100
D-1000 Berlin 39(DE)

(72) Erfinder: Gaebler, Wolfgang, Dr.
Deutschtaler Strasse 67a
D-1000 Berlin 47(DE)

(72) Erfinder: Aulich, Hubert, Dr.
Schwarzstrasse 3
D-8000 München 80(DE)

(74) Vertreter: Wolff, Konrad
Heinrich-Hertz-Institut für Nachrichtentechnik Berlin
GmbH Einsteinufer 37
D-1000 Berlin 10(DE)

(54) Überwachungssystem für Betriebsanlagen.

(57) Art und Ort des Auftretens von Störgrößen, durch die Betriebsanlagen, einzelne Objekte, aber auch die Umwelt potentiell gefährdet sind, lassen sich in den meisten Fällen nicht bzw. nicht genau vorhersagen. Das Überwachungssystem ist mit Lichtwellenleitern aufgebaut, die sich an bzw. in den zu überwachenden Objekten/Gebieten befinden, und es werden die Änderungen optischer Eigenschaften, die von solchen Störgrößen unmittelbar oder mittelbar in den Lichtwellenleitern hervorgerufen werden, beobachtet und ausgewertet. Dazu sind die Lichtwellenleiter als flächendeckendes Netz verlegt. Die Auswerte-Einrichtung befindet sich an zentraler, gegebenenfalls externer Stelle. Dort fallen also alle Informationen über auftretende Störgrößen an. Die einzelnen Meßstellen brauchen nicht betreten zu werden. Die als Detektoren eingesetzten Lichtwellenleiter dienen gleichzeitig als Übertragungsmedium und häufig auch als nicht oder nur langsam flüchtige Speicher für diese Informationen.

HAHN-MEITNER-INSTITUT FÜR KERNFORSCHUNG BERLIN GMBH
61/0681 EP

Überwachungssystem für Betriebsanlagen

Die Erfindung bezieht sich auf ein Überwachungssystem für Betriebsanlagen durch Erfassen von Störgrößen, bei dem sich an bzw. in zu überwachenden Objekten der Betriebsanlage ein oder mehrere Lichtwellenleiter befinden, und durch Beobachtung und Auswertung von Änderungen optischer Eigenschaften, die von diesen Störgrößen in Lichtwellenleitern hervorgerufen werden.

Es ist allgemein bekannt, daß in Überwachungssystemen an jeder zu überwachenden Stelle ein auf eine Störgröße ansprechender Detektor vorhanden ist, der Signale abgibt und/oder der mit einer Zentrale zur Auswertung der Detektorsignale verbunden ist. Als Störgrößen kommen z. B. Temperaturänderung, Erschütterung, Geräusche, Kern- und/oder ionisierende Strahlung oder das Vorhandensein von chemischen Stoffen, wie z. B. Gasen, in Betracht. Zur Erfassung von Störgrößen in einer Betriebsanlage sind also eine größere Anzahl Detektoren nötig, die über die Anlage punktförmig verteilt sind. Die Detektoren unterscheiden sich außerdem voneinander, sobald verschiedenartige Störgrößen erfaßt werden sollen.

Als Stand der Technik gilt für die vorliegende Erfindung die DE-A 30 15 391, die sich auf ein Verfahren zur Überwachung von physikalischen Zustandsänderungen an und/oder in Bauteilen bezieht. Um hochbeanspruchte Bauteile vorbeugend warten zu können, werden über zugängliche Anfänge und Enden von Lichtleitfasern, die in den zu überwachenden Zonen der betreffenden Bauteile befestigt oder eingelagert sind, eine oder mehrere der optischen Eigenschaften der Lichtleitfaser laufend oder in Zeitabständen beobachtet. Bezüglich verschiedenartiger Anwendungen, Anordnungen und benutzbarer Meßverfahren sollen hier nur kurz erwähnt werden:

- Verformung eines Bauteiles und Messung der Lichtdämpfung oder Laufzeit von Lichtimpulsen;

- Überschreiten bestimmter Verformungen und überwachen der Lichtleitung, auch von mehreren Lichtleitfasern oder Fasergruppen mit unterschiedlichen Eigenschaften;

- visuelle Beobachtung eines Faserendes, dessen anderes Ende durch Tageslicht oder eine zusätzliche Lichtquelle beleuchtet wird;

- Überwachung der Lichtleitung durch ein über zusätzliche Lichtleitfasern anzuschließendes Licht-Durchgangsprüfgerät;

- mäander-, wellen- oder wendelförmige Anordnungen von Lichtleitfasern;

- Temperaturüberwachung durch Messung der Lichtdämpffung;

- Feststellung/Messung von Magnetfeldern durch Messung der Übertragungseigenschaften von polarisiertem Licht;

- Messung von Dosen harter Strahlung durch Messung der Lichtdämpfung einer Lichtleitfaser in Abhängigkeit von der Wellenlänge des zur Messung verwendeten Lichts;

- Anordnung von Lichtleitfasern derart, daß sie die zu überwachenden Zonen mehrmals durchlaufen;

- Messung einer optischen Eigenschaft einer Lichtleitfaser durch Vergleich einer oder mehrerer mit physikalischen Zustandsänderungen beaufschlagten

Lichtleitfaser(n) mit einer gleichen, nicht beaufschlagten Lichtleitfaser.

Besonders hohe Anforderungen werden bei kern- oder strahlentechnischen Einrichtungen gestellt.

In der DE-A 29 41 477 ist zum Ausmessen des Leistungsprofils in einem Reaktorkern ein Flußaufzeichnungssystem angegeben, bei dem neutronenempfindliche Detektoren in axialer Richtung durch den Reaktorkern verschoben werden, wodurch die Neutronenintensität an vielen Stellen des Reaktorkerns ermittelt wird. Bei dem genannten System werden die Meßgrößen an vorher genau festgelegten Meßorten erfaßt.

In VDI-Nachrichten Nr. 24 vom 24.06.81 ist auf Seite 21 in dem Artikel "Sensoren mit Schlüsseltechnologie fertigen" angegeben, daß sich die optischen Übertragungseigenschaften von Glasfasern unter dem Einfluß radioaktiver Strahlung ändern und dieses zur Dosimetrie ausgenutzt werden kann. Dazu ist der zu überwachende Körper mit einer Glasfaser zu umwickeln. Für die Auswertung dürfte z. B. das Rückstreuverfahren in Betracht kommen, das in NTZ Bd. 31 (1978) Heft 2, S. 144-146, beschrieben ist. Es wird zum Überprüfen der kontinuierlichen Dämpfung entlang der Faserlänge eines Lichtwellenleiters, aber auch zur Fehlerortung von Faserbrüchen im Lichtwellenleiter benutzt.

Der Erfindung liegt die Aufgabe zugrunde, ein Überwachungssystem für Betriebsanlagen anzugeben, bei dem Art und Ort des Auftretens von Störgrößen - zumindest in einer großen Anzahl von Fällen - zuvor nicht bekannt sind. Es soll dennoch eine kostengünstige Überwachung, auch spezieller, potentiell gefährdeter Objekte, ermöglichen und sich zur Analyse und Ortung auftretender Störungen eignen.

Diese Aufgabe wird erfindungsgemäß dadurch gelöst, daß ein die Betriebsanlage raumauflösend sowie einzelne Objekte der Betriebsanlage punktförmig oder linienhaft erfassendes, flächendeckend verlegtes Lichtwellenleiter-Netz und eine Auswerte-Einrichtung an zentraler Stelle vorgesehen sind. Dies bedeutet im einzelnen:

Als Detektor für auftretende Störgrößen wird, soweit nicht für bestimmte physikalische Zustandsänderungen und/oder für örtlich eng begrenztes Auftreten derartiger Zustandsänderungen spezielle Detektoren vorteilhafter sind, ein Lichtwellenleiter selbst eingesetzt. Dieser dient außerdem als Transmitter sowie häufig auch als nicht flüchtiger Speicher und benötigt keine Energieversorgung. Eine räumliche Auflösung wird mittelbar dadurch erreicht, daß im Detektor - dem Lichtwellenleiter - infolge einer auftretenden Störgröße zur selben Zeit an mehreren Stellen unterschiedlich starke Veränderungen der optischen Eigenschaften hervorgerufen werden und bei der Auswertung dann Rückschlüsse auf das Zentrum der Störung gezogen werden können.

Unabdingbar dazu ist ein flächendeckend verlegtes Lichtwellenleiter-Netz, d. h. eine Netzstruktur, z.B. in Linien-, Baum-, Verzweigungs-, Ringform oder dergleichen, bei dem die Abstände der einzelnen Netzzweige voneinander der Empfindlichkeit der Lichtwellenleiter auf die auftretenden Störgrößen entsprechend zu wählen sind. Flächendeckend heißt in diesem Zusammenhang außerdem, daß Netzzweige sowohl horizontal als auch vertikal, z. B. an Gebäudewänden, verlegt werden können.

Die Auswerte-Einrichtung umfaßt sowohl einen Sendeals auch einen Empfangsteil. An dieser zentralen Stelle fallen alle Informationen über das Vorhandensein von Störgrößen an. Diese Stelle kann in besonders geschützten Räumen untergebracht sein, wobei insbesondere an die Betriebssicherheit des Überwachungssystems auch unter verschärften Meßbedingungen (beispielsweise erhöhte Dosiswerte, giftige Gase, Hochwasser, Ausfall der Energieversorgung) in der Betriebsanlage gedacht ist.

Bei bevorzugten Ausführungsformen der Erfindung kann das Lichtwellenleiter-Netz in Abschnitte untergliedert sein, die von Repeatern begrenzt sind. Durch das Auftreten einer Störgröße können nämlich die Dämpfung oder andere optische Eigenschaften eines Lichtwellenleiters so weit verändert worden sein, daß reflektierte oder rückgestreute Signale nicht mehr in der Auswerte-Einrichtung sicher detektierbar sind. Außerdem könnte gleichzeitig eine weitere Störstelle vorhanden sein, die sich jedoch nicht mehr lokalisieren läßt, wenn schon das ausgesendete Signal an der davor liegenden Störstelle extrem geschwächt wurde. Im allgemeinen reicht aber auch ein derart geschwächtes Signal noch für eine Regeneration in einem Repeater aus.

Eine weitere vorteilhafte Ausführungsform der Erfindung ist dadurch gekennzeichnet, daß im Lichtwellenleiter-Netz für raumauflösende Messungen einander zugeordnete Lichtwellenleiter-Peil-Detektoren vorgesehen sind. Bei derartigen Detektoren kann es sich z. B. um aus einem Lichtwellenleiter gewickelte Spulen handeln, die einen absorbierenden bzw. abschirmenden Kern aufweisen. Von einer Seite auf eine solche Spule treffende Strahlung, z. B. Wärmestrahlung, Fremdlicht, Kern- oder ionisierende Strahlung oder dergleichen, verändert die optischen Eigenschaften der bestrahlten Spulenteile, der abgeschirmten jedoch nicht oder zumindest doch weniger. Eine axial auf eine solche Spule treffende Strahlung bleibt praktisch wirkungslos. Mit zwei derartigen Spulen, die zusammen mit um 90° versetzten Achsen angeordnet sind, lassen sich ausreichend genaue Peilungen durchführen. Vergleichbare Ergebnisse lassen sich beispielsweise auch mit je zwei mäanderförmig auf beiden Seiten einer schirmenden Wand angebrachten Lichtwellenleitern oder drei für jeweils 120° an einem Lichtwellenleiter-Peil-Detektor erzielen.

Vorteilhaft für Ausführungsformen der Erfindung ist es auch, das Auftreten bestimmter Störgrößen an bzw. in zu überwachenden Objekten/Anlagengebieten mit Hilfe mehrerer paralleler Lichtwellenleiter, in denen eine solche Störgröße jeweils unterschiedliche Änderungen der optischen Eigenschaften hervorrufen, zu erfassen. So läßt z. B. eine Modenanalyse Rückschlüsse auf die Dosis-Tiefen-Kurve zu. Werden also bei parallelen Lichtwellenleitern unterschiedlich absorbierende Fasermäntel verwendet, ändern sich die optischen Eigenschaften bei Einwirkung derselben Dosis unterschiedlich. Es können auch Lichtwellenleiter miteinander kombiniert werden, bei denen unterschiedlich konvertierendes Mantelmaterial verwendet wird.

So weit das Auftreten von Störgrößen sowohl nach Art
als auch nach Ort vorhersehbar ist, können bei bevorzugten Ausführungsformen der Erfindung in den
Lichtwellenleiter(n) auf unterschiedliche Störgrößen
ansprechende Koppelstellen eingebaut sein. Das bedeutet, an oder in zu überwachenden Objekten oder an anderen besonderen Meßstellen, die an das Lichtwellenleiter-Netz angeschlossen sind, wird z. B. durch Temperaturänderungen, chemische Einwirkungen, Erschütterungen oder dergleichen der Abstand oder die Zusammensetzung einer Immersionsflüssigkeit zwischen zwei gekoppelten Lichtwellenleitern verändert, so daß sich
die übergekoppelte Lichtenergie dementsprechend ändert.

Wie schon erwähnt, werden besonders hohe Anforderungen
bei kern- oder anderen strahlentechnischen Einrichtungen gestellt. Die Erfindung befaßt sich daher schwerpunktmäßig - übrigens bereits in der Fassung der prioritätsbegründenden Anmeldung - mit Problemen auf diesem Gebiet. Bei Ausführungsformen der Erfindung, bei
denen als Störgröße Kern-, ionisierende Strahlung
oder dergleichen auftritt, kann die Beobachtung/Auswertung von Dämpfungs- und/oder Reflexionssignalen
nach einem an sich bekannten Rückstreuverfahren erfolgen. Hierzu wird nachstehend das bereits eingangs
erwähnte, in NTZ Bd. 31 (1978) Heft 2, S. 144-146 beschriebene Verfahren etwas eingehender erläutert:

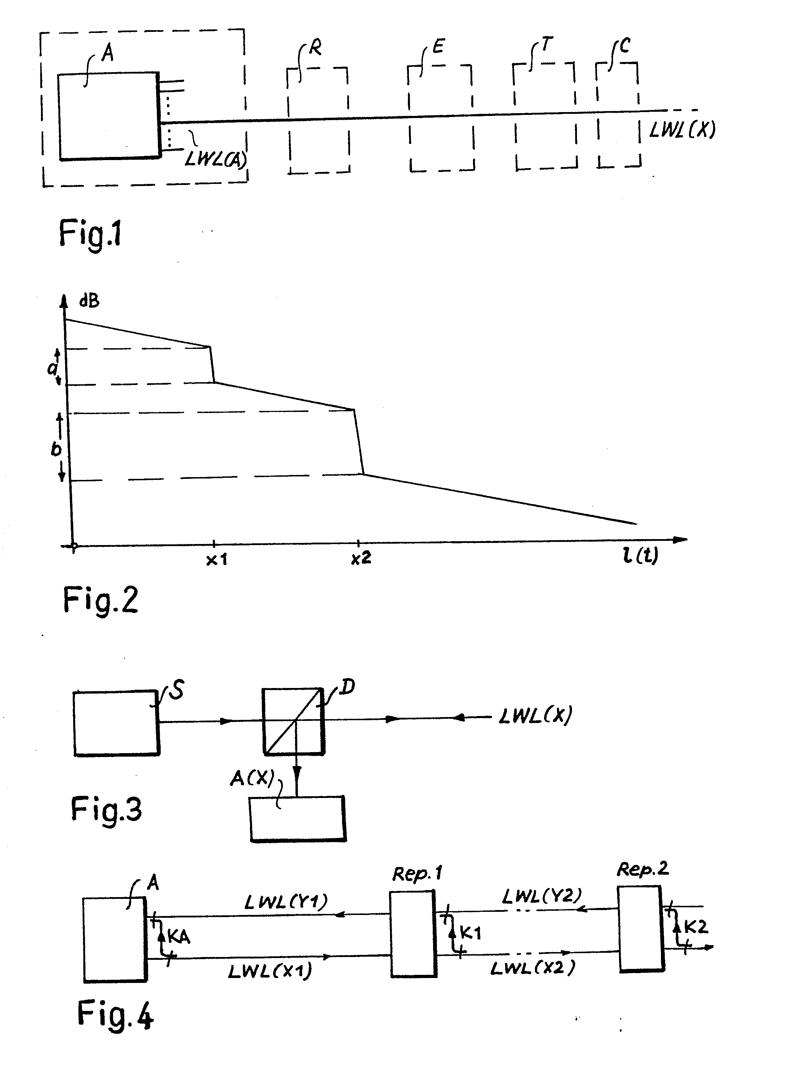

Das Licht einer gepulsten Lichtquelle wird über einen
Lichtstrahlteiler in den Lichtwellenleiter eingekoppelt (siehe Fig. 1 der obengenannten Literaturstelle).
Der eingekoppelte Lichtimpuls wird an jeder Stelle des
Lichtwellenleiters in alle Raumwinkel gestreut. Ein Teil des gestreuten Lichtes (Rayleigh-Streuung) fällt dabei auch in Rückwärtsrichtung in den Aperturwinkel der Faser und wird zum Faseranfang zurückgeführt und dort detektiert. Mit der Annahme, daß die Streuverluste proportional zu der im Lichtwellenleiter geführten Lichtleistung sind, läßt sich der Dämpfungsverlauf entlang des Lichtwellenleiters mit einer Auswerteeinrichtung abbilden. Für eine intakte Faser hat er den in Bild 2 der genannten Literaturstelle dargestellten Verlauf. Das Bild zeigt die rückgestreute Lichtleistung als Funktion der Weglänge als Gerade (abgesehen von einem durch eine Störstelle hervorgerufenen Knick bei ca. 800 m), deren Steigung ein Maß für die kontinuierliche Dämpfung des Lichtwellenleiters ist.

In Bild 3 ist die rückgestreute Lichtleistung eines anderen Lichtwellenleiters dargestellt, der mehrere Störstellen aufweist. Diese äußern sich durch mehrere Pegelabsenkungen in der Kurve, deren Steigungen ein Maß für die lokalen Dämpfungen darstellen und den Störgrößen proportional sind. Außerdem hat die Kurve ab ca. 500 m eine größere Steigung, d. h. die Dämpfung des Lichtwellenleiters ist in dessen zweiter Hälfte höher.

Mit dem Verfahren lassen sich auch jede Art von Faserbrüchen detektieren. Ist der Faserbruch derart, daß er ein Reflexionssignal erzeugt, weist die Kurve an der Stelle des Faserbruches einen Peak auf, wie er auch durch Reflexion am Ende eines Lichtwellenleiters entsteht (Fresnelreflex). Überschreitet dagegen bei einem Faserbruch der Winkel zwischen Bruchfläche und Faserachse den halben Aperturwinkel der Faser, wird keine Lichtleistung in Rückwärtsrichtung in die Faser geleitet, die Kurve fällt an dieser Stelle auf den Wert Null ab.

Mit einem Überwachungssystem gemäß der Erfindung läßt sich also besonders einfach radioaktive Strahlung nachweisen, und es kann deshalb z. B. zur Überwachung des Sekundärkreislaufes eines Druckwasserreaktors auf Radioaktivität eingesetzt werden. Dazu wird der Lichtwellenleiter z. B. an einem Rohr des Sekundärkreislaufes, eventuell in mehreren Windungen, befestigt und an die beschriebene Meßvorrichtung angeschlossen. Auftretende Radioaktivität wirkt direkt auf die Faser des Lichtwellenleiters in der Weise, daß das Material der Faser sich an den Stellen, an denen es von Kernstrahlung getroffen wird, dunkler färbt und damit die Dämpfung des Lichtwellenleiters größer wird. Diese Dämpfungsänderung, die der Dosis der Strahlung proportional ist, wird in beschriebener Weise ausgewertet.

Zur Überwachung eines Gebietes, z. B. innerhalb eines Kernkraftwerkes oder zur Grundwasserüberwachung, wird der Lichtwellenleiter als linienhafter Detektor in geeigneter Weise, z. B. mäanderförmig flächendeckend verlegt. Um eine insgesamt gleichmäßige Signalstärke über den erfaßten Raumbereich zu erhalten, erfolgt durch Wahl der Flächenbelegung ( z. B. Windungen/m bei Rohren) eine Anpassung des induzierten Signals an die erwartete Meßgröße.

Ebenso läßt sich das Überwachungssystem zur Ortung und Bestimmung der Mächtigkeit von Uranerzlagerstätten einsetzen, indem der Lichtwellenleiter in Probebohrungen eingebracht wird. Ort und Stärke der Radioaktivität werden durch Anwendung des bekannten Verfahrens bestimmt.

Um im Störungsfall ein Weiterarbeiten des Überwachungssystems zu gewährleisten, sind - wie bereits weiter oben schon erläutert - an dem zu überwachenden Objekt bzw. Gebiet mehrere Lichtwellenleiter mit unterschiedlicher Empfindlichkeit für Kern- und/oder ionisierende Strahlung parallel angeordnet. Bei Auftreten einer bestimmten Dosis Radioaktivität wird zunächst die empfindlichere Faser geschwärzt und vom System erkannt. Andere Störungen, die hinter dieser Störstelle liegen, werden nun aber nicht mehr erfaßt. Damit letzteres gewährleistet ist, ist ein nichtempfindlicher Lichtwellenleiter dem empfindlichen parallel geschaltet.

Für spezielle Anwendungen kann ein Lichtwellenleiter eingesetzt werden, dessen durch die Störgröße induzierte Dämpfung als Funktion der Zeit abklingt. Da dieser Lichtwellenleiter selbstausheilend ist, braucht er nach einer aufgetretenen Störgröße nicht ausgewechselt zu werden.

Andere Störgrößen, wie z. B. starke Biegungen, große Verschiebungen, Explosionen, die auf den Lichtwellenleiter direkt wirken, führen zu dessen Bruch, der mit dem beschriebenen Meßverfahren durch auftretende Fresnelreflexe erkannt und ausgewertet wird. Bei Feuer tritt neben dem Fresnelreflex noch Fremdlicht auf. Wird der Lichtwellenleiter als Ring verlegt, kann bei dessen Bruch von beiden Enden des Lichtwellenleiters aus gemessen werden. In diesem Zusammenhang ist noch auf eine sogenannte Doppelringstruktur (s. DE-PS 28 20 428C und DE-PS 28 43 088C hinzuweisen, bei der bei einem Totalausfall an einer Stelle das System als solches betriebsfähig bleibt.

In den Lichtwellenleiter eingebaute, auf unterschiedliche Störgrößen ansprechende veränderliche Koppelstellen können auch die Dämpfung des Lichtwellenleiters beeinflussen. Eine z. B. auf Temperaturerhöhung ansprechende veränderliche Koppelstelle enthält einen Bimetallstreifen, der mit einem Faserstück als Koppelelement zum Lichtwellenleiter verbunden ist. Bei Temperaturerhöhung werden Koppelelement und Lichtwellenleiter dejustiert, so daß eine Dämpfungserhöhung auftritt. In entsprechender Weise können andere Störgrößen auf Dämpfungsänderungen des Lichtwellenleiters transformiert werden.

Der verlegte Lichtwellenleiter kann mehrere dieser veränderlichen Koppelstellen verbinden, so daß ein Überwachen mehrerer Störgrößen mit ein und demselben Lichtwellenleiter möglich ist. Andererseits ist für mehrere Lichtwellenleiter nur eine Auswerteeinrichtung erforderlich, die an dem von der bzw. den Störstellen entfernten und eventuell gut geschirmten Ort installiert ist, so daß die Auswerteeinrichtung nicht exponiert wird. Meßorte selbst brauchen nicht betreten zu werden.

Der bzw. die Lichtwellenleiter benötigen keine äußere Stromversorgung. Diese ist lediglich für die gegebenenfalls gepulste Lichtquelle und die Auswerteeinrichtung erforderlich. Die Auswerteeinrichtung kann so eingestellt werden, daß sie nur auf die über die normale kontinuierliche Dämpfung eines Lichtwellenleiters hinausgehenden diskontinuierlich auftretenden Dämpfungsänderungen anspricht.

Solange kein Störfall vorliegt, lassen sich die Lichtwellenleiter als Kommunikationsstrecken zwischen Quellen und Senken benutzen. Hierbei kann es sich um die Übermittlung von Prozeßdaten oder dgl. oder auch um Video-Übertragungen für die Überwachung von Prozeßabläufen usw. handeln.

Von besonderer Bedeutung für Ausführungsformen der Erfindung ist schließlich, daß sich die Auswerte-Einrichtung auch an externer Stelle außerhalb der zu überwachenden Betriebsanlage befinden kann. Der Zutritt kann beispielsweise nur einer aufsichtführenden Behörde bzw. deren Vertretern, dem Betreiber der Betriebsanlage dagegen nicht gestattet sein.

In der Zeichnung sind einige Einzelheiten der Erfindung schematisch dargestellt. Dabei zeigen:

    Fig. 1: eine Systemübersicht als Blockschaltbild;

    Fig. 2: ein Schaubild (Rückstreusignal über der Weglänge aufgetragen) für ein Auswertungsprinzip;

    Fig. 3: eine Auswerte-Einrichtung als Blockschaltbild

und Fig. 4: einen Zweig eines Lichtwellenleiter-Netzes mit Repeater-Strecken.

Bei der in Fig. 1 dargestellten Systemübersicht sind die wesentlichen Teile für ein Überwachungssystem gemäß der Erfindung angegeben. An zentraler, möglicher Weise an externer Stelle befindet sich die Auswerte-Einrichtung A. Sie enthält z. B. einen Sender, einen Empfänger, Meßgeräte, Registriergeräte usw. sowie die Einrichtungen zur Energieversorgung des Überwachungssystems. Bei größeren Systemen, die eine Vielzahl von zu überwachenden Objekten und/oder Gebieten enthalten, können diese von der Auswerte-Einrichtung in einem Multiplexverfahren abgefragt werden. Das bedeutet, die einzelnen Detektoren können im Raum-Multiplex, Zeit-Multiplex, Wellenlängen-Multiplex oder dergleichen und deren Mischformen angeschlossen und betrieben werden.

Gegebenenfalls führen von der Auswerte-Einrichtung A zur zu überwachenden Betriebsanlage Lichtwellenleiter LWL ( A) in einem mehr oder weniger starken Bündel, die zum Anschluß der eigentlichen Detektoren dienen. Zur Erkennung und Lokalisierung von Störfällen in der Betriebsanlage wird dort ein Lichtwellenleiter-Netz LWL (X) verlegt. Die Lichtwellenleiter LWL (X) dieses Netzes haben gleichzeitig die Funktion ortsauflösender Detektoren und Transmitter. Die durch Störgrößen in den Lichtwellenleitern LWL (X) hervorgerufenen Änderungen optischer Eigenschaften werden als solche in der Auswerte-Einrichtung A erkannt.

Es kann eine integrale Aufzeichnung über der Zeit erfolgen, ohne daß einem solchen Detektor von außen her Energie zugeführt werden muß. Handelt es sich um nicht oder nur langsam selbst ausheilende Änderungen der optischen Eigenschaften, bleibt die Information über das Auftreten einer Störgröße im Detektor gespeichert und kann wiederholt abgefragt werden.

Die Lichtwellenleiter LWL (X) erlauben infolge ihrer linienhaften Struktur bei entsprechender Verlegung eine flächenhafte Abdeckung potentiell gefährdeter bzw. die Umgebung gefährdender Objekte und dienen dabei direkt als Detektoren. Durch Verwendung geeignet abgestimmter Detektoren ist die Überwachung mehrerer unterschiedlicher Störgrößen mit demselben System möglich. Beispielhaft seien erwähnt: Strahlenfelder R, explosionsgefährdete Orte E, hohe Temperaturen T, auslaufende/ausströmende chemische Stoffe C. Das Netz der Lichtwellenleiter LWL (X) kann jede denkbare Struktur, z. B. Stern-, Baum-, Verzweigungs-, Ringstruktur in reiner oder gemischter Form aufweisen.

Aus dem in Fig. 2 dargestellten Schaubild ist für das Auswertungsprinzip folgendes zu erkennen. Das über der Weglänge aufgetragene Rückstreusignal ergibt sich aus der Messung des Zeitunterschiedes zwischen Aussendung und Empfang eines Pulses in der Auswerte-Einrichtung A. Zwischen dem Ursprung und der Stelle x1 ist ein kontinuierlicher Abfall des Pegels festzustellen. Das heißt, in diesem Bereich befindet sich keine Störstelle. Die Diskontinuität bei x1 ist z. B. auf einen Temperatursprung, Dosiswerte oder dergleichen zurückzuführen. Die Dämpfung steigt bzw. der Pegel des Rückstreusignals fällt plötzlich um den Wert a (dB). Zwischen den Meßstellen x1 und x2 herrschen wiederum normale Verhältnisse. Bei x2 tritt eine sich quantitativ noch stärker auswirkende Störung - Meßwert b (dB) - auf. Der Zusammenhang zwischen Laufzeit und Weglänge ist einfach und lautet:

Weglänge = Konstante (LWL) x Laufzeit.

Da die örtliche Lage des betreffenden Lichtwellenleiters LWL (X) bekannt ist, kann der Ort des Auftretens einer Störgröße dadurch genügend genau angegeben werden.

Für die Auswerte-Einrichtung A, die in Fig. 3 als Blockschaltbild dargestellt ist, kommen im wesentlichen herkömmliche Geräte und Anordnungen zur Anwendung. Von einer gepulsten Lichtquelle S wird eine Pulsfolge ausgesendet. Diese gelangen über einen Strahlteiler D mit einer halbdurchlässigen Schicht in den Lichtwellenleiter LWL(X). Dort rückgestreute, zurückkehrende Pulse werden von der halbdurchlässigen Schicht im Strahlteiler D zur eigentlichen Empfangs-, Nachweis- und Auswerteeinrichtung A(X) geleitet.

Im Netz mit den Lichtwellenleitern LWL(X) können auch Zweige mit Repeater-Strecken, wie in Fig. 4 schematisch dargestellt ist, vorgesehen sein. Derartige Ausführungsformen sind insbesondere dann vorteilhaft, wenn mehrere Störgrößen im selben Zweig zur gleichen Zeit auftreten und erkannt und lokalisiert werden sollen. Solche Netzzweige sind mit jeweils mindestens zwei Lichtwellenleitern LWL(X) für die Hinrichtung und LWL(Y) für die Rückrichtung auszurüsten. Rückstreusignale oder dergleichen, die in einem Lichtwellenleiter LWL(X) auftreten, werden über Faserkoppler K in den betreffenden Lichtwellenleiter LWL(Y) übergekopppelt und gelangen so zur Auswerte-Einrichtung A zurück. Tritt z. B. im Lichtwellenleiter LWL(X1) eine Störgröße auf, die ein Rückstreusignal hervorruft, kann dieses sowohl - entsprechend Fig. 3 - am Anfang des Lichtwellenleiters LWL(X1) als auch infolge der Überkopplung durch den Koppler KA am Ende des Lichtwellenleiters LWL(Y1) festgestellt werden. Die erwähnte Störgröße kann jedoch das ausgesendete Signal und insbesondere auch rückgestreute Signale von noch weiter entfernten Streckenabschnitten so weit schwächen, daß eventuell auftretende weitere Störstellen
nicht zu erkennen, geschweige zu lokalisieren sind.
Hiergegen wird Abhilfe geschaffen, indem ausgesendete
Signale an den Enden der Abschnitte von Repeatern
Rep.1, Rep.2, ... regeneriert und mit ursprünglichem
Pegel auf den folgenden Streckenabschnitt gelangen.
Dies gilt sowohl für die Hin- als auch für die Rückrichtung, wobei jedoch infolge der richtungsabhängigen Repeater Rep.1, Rep.2, ... alle zu Anfängen von
Lichtwellenleitern LWL(X) rückgestreuten Signale über
Koppler K in Lichtwellenleiter LWL(Y) übergekoppelt
werden müssen, um von der Auswerte-Einrichtung A erkannt werden zu können. Die für die Repeater erforderliche Energieversorgung bedeutet allerdings einen
Nachteil, der jedoch in vielen Fällen nicht so sehr
ins Gewicht fällt.

HIERZU 1 BLATT ZEICHNUNGEN

0071561

HAHN-MEITNER-INSTITUT FÜR KERNFORSCHUNG BERLIN GMBH
                                                61/0681


Patentansprüche

1. Überwachungssystem für Betriebsanlagen durch Erfassen von Störgrößen, bei dem sich an bzw. in zu überwachenden Objekten der Betriebsanlage ein oder mehrere Lichtwellenleiter befinden, und durch Beobachtung und Auswertung von Änderungen optischer Eigenschaften, die von diesen Störgrößen in Lichtwellenleitern hervorgerufen werden,
d a d u r c h   g e k e n n z e i c h n e t , daß ein die Betriebsanlage raumauflösend sowie einzelne Objekte der Betriebsanlage punktförmig oder linienhaft erfassendes, flächendeckend verlegtes Lichtwellenleiter-Netz und eine Auswerte-Einrichtung an zentraler Stelle vorgesehen sind.

2. Überwachungssystem nach Anspruch 1, dadurch gekennzeichnet, daß das Lichtwellenleiter-Netz in Abschnitte untergliedert ist, die von Repeatern begrenzt sind.

3. Überwachungssystem nach Anspruch 1 oder 2, dadurch gekennzeichnet, daß im Lichtwellenleiter-Netz für raumauflösende Messungen einander zugeordnete Lichtwellenleiter-Peil-Detektoren vorgesehen sind.

4. Überwachungssystem nach einem der Ansprüche 1 bis 3, dadurch gekennzeichnet, daß das Auftreten bestimmter Störgrößen an bzw. in zu überwachenden Objekten/Anlagengebieten mit Hilfe mehrerer paralleler Lichtwellenleiter, in denen eine solche Störgröße jeweils unterschiedliche Änderungen der optischen Eigenschaften hervorrufen, erfaßt wird.

5. Überwachungssystem nach einem der Ansprüche 1 bis 4, dadurch gekennzeichnet, daß in den Lichtwellenleiter(n) auf unterschiedliche Störgrößen ansprechende Koppelstellen eingebaut sind.

6. Überwachungssystem nach einem der Ansprüche 1 bis 5, dadurch gekennzeichnet, daß als Störgröße Kern-, ionisierende Strahlung oder dgl. auftritt und die Beobachtung/Auswertung von Dämpfungs- und/oder Reflexionssignalen nach einem an sich bekannten Rückstreuverfahren erfolgt.

7. Überwachungssystem nach Anspruch 6, dadurch gekennzeichnet, daß die beim Rückstreuverfahren benutzte Auswerte-Einrichtung nur auf die über die normale kontinuierliche Dämpfung eines Lichtwellenleiters hinausgehenden diskontinuierlich auftretenden Dämpfungsänderungen anspricht.

8. Überwachungssystem nach einem der Ansprüche 1 bis 7, dadurch gekennzeichnet, daß der/die Lichtwellenleiter als Kommunikationsstrecke benutzt werden.

9. Überwachungssystem nach einem der Ansprüche 1 bis 7, dadurch gekennzeichnet, daß sich die Auswerteeinrichtung an externer Stelle außerhalb der zu überwachenden Betriebsanlage befindet.

1 / 1

0071561

Fig.1

Fig.2

Fig.3

Fig.4